# EUROPEAN PATENT SPECIFICATION

(11) **EP 0 210 503 B1**
(45) Date of publication and mention of the grant of the patent: **17.02.1993**
(21) Application number: 86109507.3
(22) Date of filing: 11.07.1986
(51) Int. Cl.: E01F 9/08, G01K 11/16, G08B 19/02, G08B 21/00, G08G 1/09, G09F 13/22

(54) **Luminous horizontal roadway marking strips**
Leuchtende Markierungsbänder für Verkehrsflächen
Bandes lumineuses pour la signalisation routière horizontale

(30) Priority: 23.07.1985 CH 3197/85; 03.04.1986 CH 1294/86; 08.04.1986 CH 1360/86
(43) Date of publication of application: 04.02.1987
(60) Divisional application: 90124000.2
(73) Proprietor: MINNESOTA MINING AND MANUFACTURING COMPANY, St. Paul, Minnesota 55144 (US)
(72) Inventor: Eigenmann, Ludwig, Dr., CH-Agno (CH)
(74) Representative: Madgwick, Paul Roland

(56) References cited:
- EP-A- 0 033 525
- EP-A- 0 089 215
- EP-A- 0 144 458
- BE-A- 424 718
- DE-A- 1 910 646
- DE-A- 1 957 630
- DE-A- 2 005 751
- DE-A- 2 417 584
- DE-A- 2 527 877
- DE-A- 2 609 318
- DE-A- 2 901 196
- DE-A- 2 940 205
- DE-A- 3 031 246
- FR-A- 854 390
- FR-A- 2 340 410
- GB-A- 1 123 354
- GB-A- 2 081 485
- GB-A- 2 097 111
- US-A- 3 836 275
- US-E- 31 291
- BATIR, vol. 149, June 1966, XLIII, Le Bâtiment, Paris, FR; "Nouveau système de signalisation urbaine"
- POLYTECHNISCH TIJDSCHRIFT, edition E. Elektrotechniek-Electronica, vol. 28, no. 5, 3rd July 1973, STAM Tijdschriften, Rijswijk, NL; "Matrix-lichtbakken met glasvezeloptiek"

## Description

The problem of traffic safety, especially at night, has prompted a good deal of study and experimentation, a considerable contribution having also been made by the applicant, in the specific field of the horizontal road marking; that is that marking which is designed to supply the motorist with quick and accurate information regarding the aspects of the road - curves, intersections, deviations, obstacles, etc. - under all kinds of illumination and weather conditions.

In addition to numerous inventions regarding nighttime traffic safety, based on the use of retroreflecting elements, the applicant has also developed systems which incorporate their own light source. Under particularly foggy or misty conditions, the efficiency of such systems is superior to the systems using retroreflecting elements. These latter systems, however, have been made more and more efficient in recent years, also through developments made by the applicant.

The applicant has claimed the development of a marking strip that gives off its own light in its Italian Patents Nos. 982,743 and 990,780 and in the corresponding USA Patent No. 3,996,556. The light is produced by incandescent or fluorescent lamps or by luminous pigments activated by visible and even non-visible light.

DE-A-2 417 584 discloses in accordance with the first part of claim 1 roadway marking material having electrically energized light sources and circuitry permitting said lights to be switched on when a sensor associated with said material detects the lights of an approaching vehicle. Furthermore, this prior art document suggests the incorporation of timers, known per se, in the roadway marking material for time controlling the energisation of the electrically energized light sources in response to the detection by said sensor of the lights of an approaching vehicle.

In the prior art, however, little attention, if any at all, has been given to the desirability of developing such marking strips with the capability of warning drivers and pedestrians that icy conditions may be in existance. The desirability of the provision of such marking strips on dangerous curves as well as before traffic lights need not be explained.

It is an object of the present invention to provide a luminous roadway marking strip that it capable of giving warning of an icy road hazard.

According to the present invention there is provided a prefabricated tape-like composite roadway marking material for horizontal road-marking purposes, in the form of a composite marking strip, comprising in combination:
(a) a continuous base strip to be applied to the surface of the roadway;
(b) a series of transparent protruding elements located in predetermined positions distributed along said base strip, said protruding elements housing low-current-drawing active electrical light sources;
(c) circuit means connecting said electrical light sources with a low-current electrical power supply including control switch means for controlling the energization of said light sources with current generated by said power supply, said circuit means being arranged in said base strip;
(d) said control switch means comprising a photosensitive device located on the strip and arranged for being excited by light from the head-lights of approaching motor vehicles whereby to effect energization of said light sources in dependence on light received from the head-lights of approaching motor vehicles;
   at least a portion of the surface of said marking strip comprising cholesteric liquid crystals that change colour at low temperatures.

Preferably, the portion of the surface of the marking strip that comprises said cholestric liquid crystals is illuminated by a light emitting diode.

The invention proposes, most importantly, the use of Light Emitting Diodes (LEDs) for providing the light for the marking strip. When, for example, a 12-volt potential is applied to those appropriately "doped" semiconductors, they emit photons and become luminous and are visible over long distances during the nighttime hours. The amount of current drawn is very low as compared to the producing of the same amount of light by an incandescent lamp. The produced light can be more or less focused and, depending on the particular type of "doping" used, certain colors can be obtained. It was also unexpectedly found that LEDs are resistant to traffic vibrations, which are significant vibrations even if not very perceptibile to our physical senses.
According to this invention, the LEDs are distributed and appropriately spaced (indicatively but not necessarily at intervals of several tens of centimeters) along the marking strip, and contained inside of protruding transparent capsules imbedded in the marking strip itself, as shown more clearly in the diagram described further on.
This invention also provides for the use of filament or halogen type of microlamps for special applications - as described further on - which are powered by an external current source. As regards the current source, provision is made for all these cases to limit the amount of current required to the absolute minimum, the current being furnished either by photoelectric solar cells, a bank of storage batteries or - as mentioned previously - a standard electrical network.

Also within the possibilities of this invention is the ability of the luminous marking strip to be activated by the light coming from the headlights of the oncoming vehicle. In this case, the marking strip is activated on command when, and for the length of time, necessary.
Provision may also made for the marking strip to be activated by the traffic signal lights.
One of the very important possibilities offered by the luminous marking strip described in this invention is the possibility of providing differentiated roadmarking indications; for example, the use of different colored lights for signaling the presence of ice on the road.

In all the cases considered, provision may be made for the combined use of retroreflecting elements for nighttime roadmarking service, than can be particularly useful in an emergency situation where the main roadmarking devices - that are the object of this invention - do not illuminate due to the current being interrupted for any reason whatsoever.

The aforementioned retroreflecting elements could be of the type described in the applicant's USA Patents Nos. 4,072,403, 4,469,645 and R 31,291.

The different ways of applying this invention are described below with reference made to the following diagrams:
- Fig. 1, schematically showing the marking strip with the light sources applied to it, and the light-source activator which is sensitive to the lights from the headlights of the approaching motor vehicle.
- Fig.2, schematically showing the traffic-light-actuated luminous marking strip.
- Fig.3, representing the luminous marking strip applied along a curve.
- Fig.4, representing a luminous marking strip equipped with a photosensitive device for turning on the low-current-draw luminous elements, and another device for turning on the microlamps, fed by an external current source, when fog conditions exist.
- Fig.5, showing a detail of Fig.4.
- Fig.6, representing a non-limiting example of a circuit for realizing the arrangement illustrated in Figs. 4 and 5.
- Fig. 7, representing an example of the distribution on the marking strip of the elements forming the alternative shown in Figs. 4 & 5.
- Fig.8, representing a luminous marking strip whose luminous elements are fed by current produced by solar cells and which has catadioptric prisms arranged next to the luminous elements.
- Fig.9, representing a non-limiting example of a circuit for realizing the arrangement illustrated in Fig. 8.

This invention and the various alternatives will now be examined in detail, with references made to the above-mentioned diagrams.

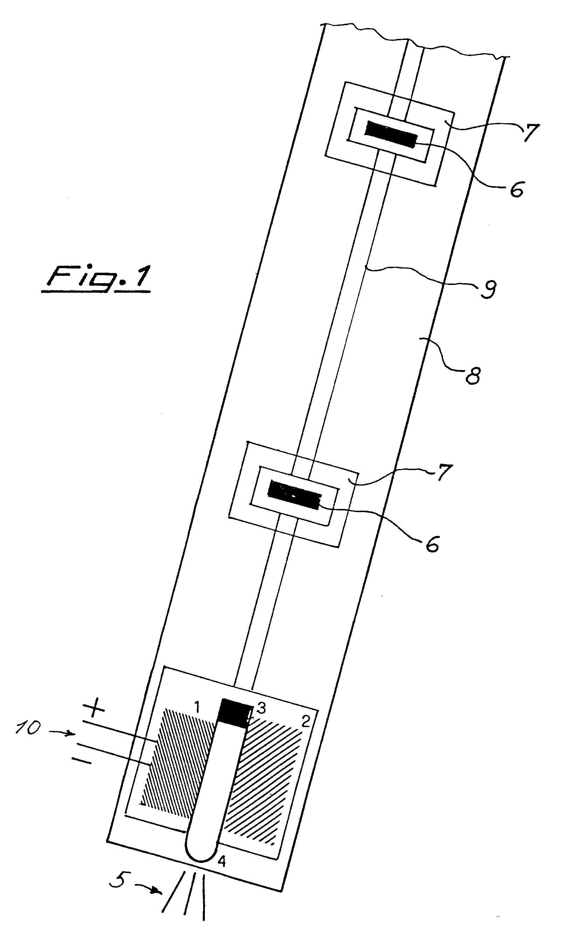

In Fig. 1, the microswitch (1) is actuated through the microamplifier (2) by the photoelectric celle (3); the microfocusing lens (4) has the function of concentrating the light beams (5), coming from the headlights of the oncoming motor vehicle, onto the photoelectric cell (3), and can be appropriately oriented to select a particular actuating beam of light.

When the photoelectric cell (3) causes the microswitch (1) to close, the current coming from the source (10) passes through the conductors (9) to the light sources (6) - which are, for example, LEDs - located inside the protruding trasparent bodies (7) applied to the marking strip (8).
The conductors (9) can consist of a brass network and be immersed in the body or in the bonding material of the strip (8). The current source (10) can be a traditional current source or a photovoltaic cell and batteries, as we shall better describe further on.
As an alternative, light sources (6) having different colors can be provided, alternating red and green for example, with timers, or some other such means, being used to illuminate them at different times. In this event, there will be three conductions (9) instead of two.

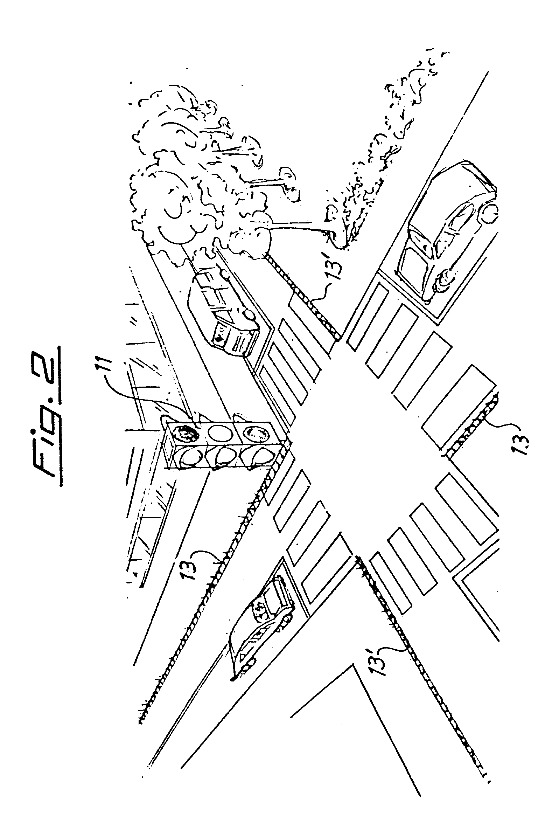

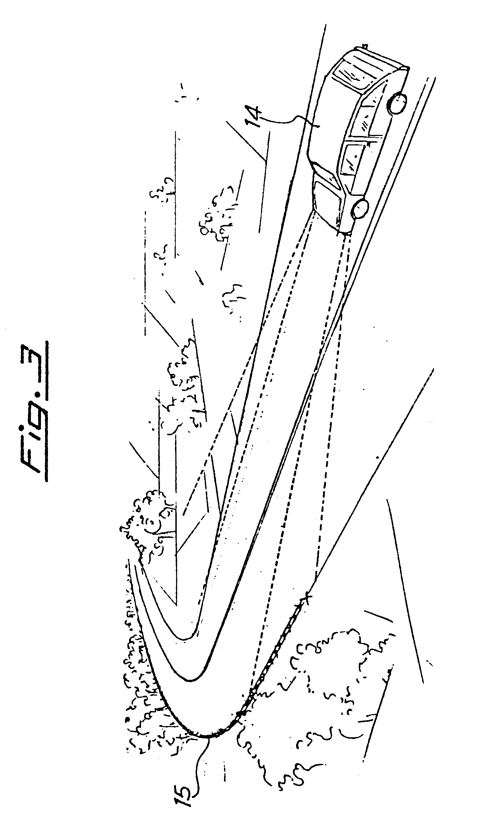

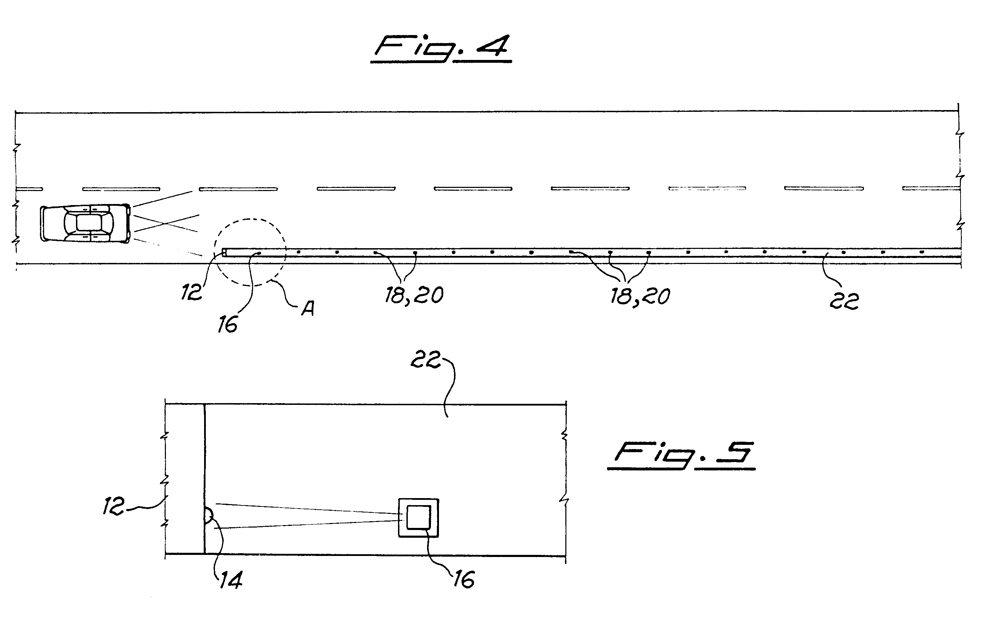

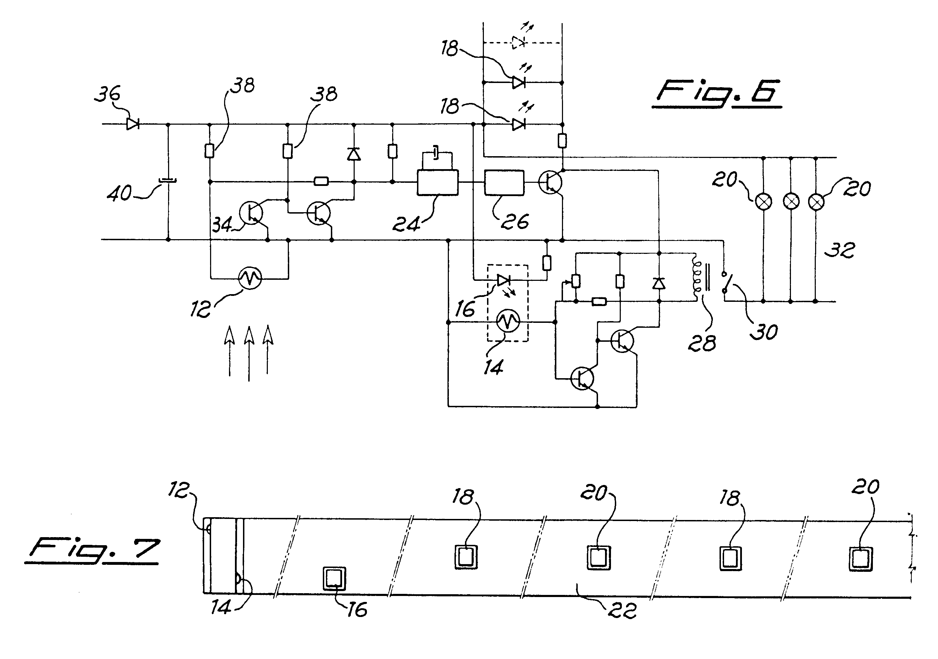

In Fig.2, the light from a traffic light (11) passes through optical fibers to groups of microamplifiers, photoelectric cells and microswitches - similar to those described above - which turns on the luminous sources located on the strips (13) and (13'), producing a red or green color according to the particular color of the traffic light.

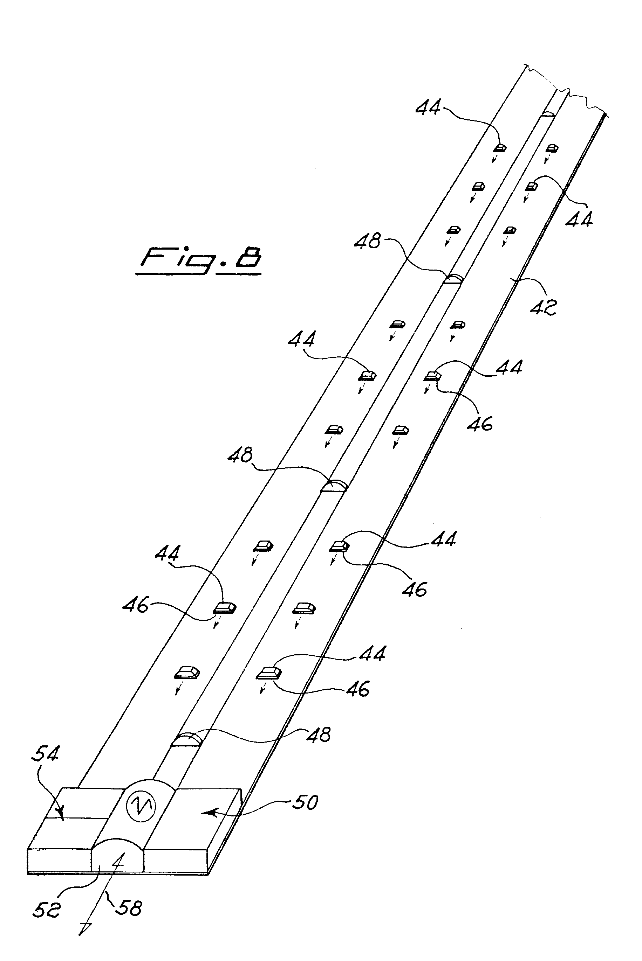

Fig. 3 shows another application of this invention. The head-light beams from vehicle (14) pass through devices similar to those described above and cause the light sources along the strip (15) to be turned on. The said light sources follow the curve of the road and thus show this curve to the driver of the oncoming motor vehicle.

This type of marking strip is especially useful at stop lights when there is fog present.

Fig.4 schematically shows a marking strip that was also designed to provide a high degree of safety when fog conditions exist on the road, especially on curves and at intersections. The marking strip is provided with a double system of luminous elements, one consisting of LEDs - mentioned earlier - and the other of filament or halogen-type microlamps.
The use of filament or halogen-type microlamps are necessary for illuminating marking strips under foggy conditions because the intensity of just the light produced by the LEDs is not strong enough to provide adequate visibility.

The two problems that we have here are that the illuminated bodies - especially the filament type - have to resist being exposed to traffic vibrations and, secondly, they absorb a considerable amount of current. The vibration-resistance problem has, fortunately, been overcome recently by the advent of filament-type microlamps on the market that are quite rugged - the filament being short and thick - and particularly resistant to vibration.
We still, however, have the problem of the high current requirement. If the installation is not a very small one, the current has to be provided by an external source. The operating purpose of this current source - and, thus, its cost - can be redimensioned by automation of the roadmarking system, whereby the microlamps needed for foggy conditions are only activated by the headlights of approaching traffic when fog is present. Otherwise they do not turn on. Furthermore, they operate intermittently.
Since foggy conditions occur sporadically, the filament or halogen-type microlamp markings have to be used in conjunction with a LED system to provide a roadway marking system that is valid both when the weather is foggy and when there is no fog present.

This combined type of marking system has two photosensitive devices. The first device activates the LED circuit when it is contacted by the headlight beams of the approaching motor vehicles, and the second device deactivates the filament or halogen-type microlamp circuit, which interrupts the current to the microlamps when there is no fog present.
This second circuit naturally needs devices that can vary the luminosity and the sensitivity of the photosensitive device that controls the opening and closing of the microlamp circuit. In foggy weather, the amount of light received by the photosensitive device that controls the microlamp circuit is considerably diminished, which keeps the circuit from opening: it remains closed. Both photosensitive devices can be provided with a focusing lens unit for concentrating the light coming from the headlights of the approaching motor vehicles or from the LED (16), so as to increase the efficiency.

Fig.4 shows a non-limiting example of the arrangement of a marking strip (22) on a roadway, with zone A also being shown enlarged in Fig.5. The LEDs (18) or filament or halogen-type microlamps (20) - the luminous indicating elements - are shown applied onto the strip. The light detector unit (12) is also shown, which receives the light from the headlights of the approaching motor vehicles and which can be a photoelectric cell, phototransitor or the like, as well as the fog-signaling unit which consists of a LED (16) and a photosensitive device (14).

The diagram shown in Fig.6 is a non-limiting example of the arrangement of the various elements for realizing the forementioned embodiment of this invention.
Again, there is the photosensitive unit or light detector (12), which receives the light from the motor-vehicle headlights, and the analogous unit (14) that, together with the LED (16), reveals the presence of fog.
Then there are again the LEDs (18) that are turned on by the light-detector unit (12), activated by the headlights of the approaching motor vehicle. The LEDs do not turn on immediately but are controlled by a timer (24) that turns them on only after a certain period of time,to allow the vehicle to come closer to the initial part of the marking strip. The timer can be set to allow a time lag of just a few seconds or for a longer period of time, depending on the average traffic speed in the particular zone. Another timer (26) can be provided, as required, to make the LEDs operate in a blinking mode.

As previously mentioned, the LEDs can receive their current from a bank of standard storage batteries, or a combination of photovoltaic solar cells and storage batteries can be used, as is described more in detail further on.

When fog conditions obtain, the reduced intensity of the light received by the photosensitive device (14) causes the relay (28) to actuate and turn off the switch (30). This causes current to flow to the microlamps (20) from an appropriate external line (32).

The microlamps (20) are also controlled by the timers (24) and (26). The presence of timer (26) to provide the blinking mode is in this case very appropriate.

The circuit is completed by appropriate amplifying transsistors (34), the diodes (rectifiers) (36), resistances (38) and capacitors (40).

Fig.7 gives an example of the arrangement of the LEDS (18), the microlamps (20) and the LED 16 on the marking strip. The luminous elements in this version can also be combined with, or alternated with, the type of retroreflector elements covered in the applicant's previously-mentioned patents, notwithstanding the fact that the luminous marking strip and inherent circuits are realized with high-tech elements, which then provides a considerable guarantee of high efficiency.

As previously mentioned, the LEDs can be fed by the electrical energy produced by solar cells or photovoltaic batteries. Such a system constitutes one of the versions that completes this invention.
The roadmarking strip (42) shown in Fig.8 has solar cells (44) applied to it. They are arranged next to retroreflecting elements, shown in the figure as catadioptric prisms (46), which are the retroreflecting units that are the object of the applicant's aforementioned USA Patent No. 31,291. The catadioptric prisms are shown here arranged below the solar cells but, as previously mentioned, they can be arranged next to the solar cells, or even spaced therefrom without exceeding the limits of this invention.

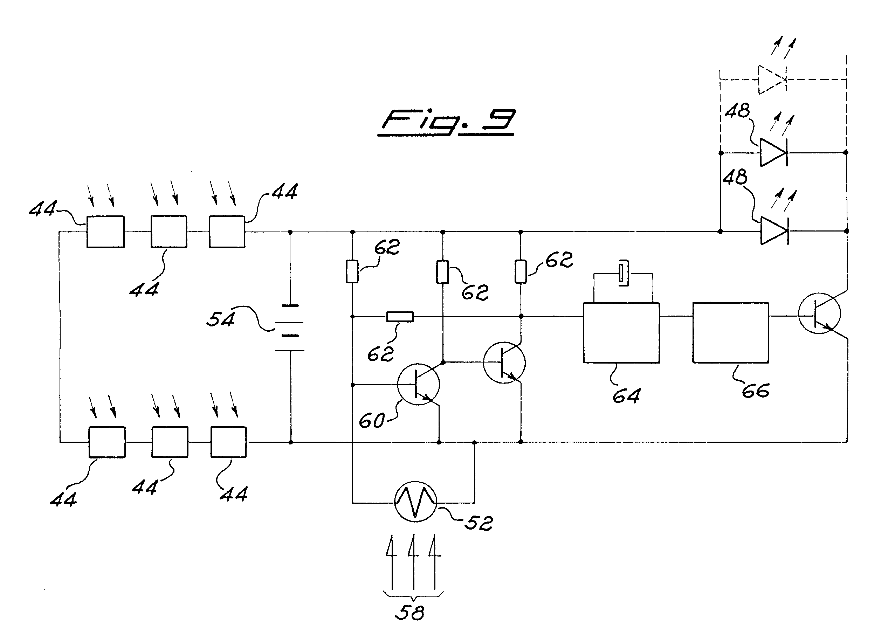

The arrangement of the LEDs (48) is only indicative by way of example, and in no way restrictive.
The control box (50), which contains a light detector (52), one or more batteries (54) and timers, is schematically represented and located at the beginning end of the marking strip (42). The contents of the box (50) are connected together as shown, by way of example, in Fig.9. This shows how the solar cells (44) feed the batteries (54) to keep them at full charge.
The light detector (52) consists essentially of a photoelectric cell, or a phototransistor, and a microswitch. When the light detector (52) receives the light from the headlights (58) of an approaching motor vehicle, the circuit that feeds current from the batteries (54) to the LEDs (48) is closed by means of the appropriate transfer unit (60) and resistors (62). The closure of the circuit may not be immediate nor continuous. In fact, a timer (64) can be provided to cause a time lag between the time the beam from the headlights (58) strikes the light detector (52) and the LEDs (48) light up. Furthermore, another timer (66) can be provided to cause the light emitted by the LEDs (48) to blink on and off.
Both the light detector (52) and timers (64) & (66) are readily available on the market, as are also the photovoltaic batteries, which are usually made of laminated silicon crystals. The LEDs are of the type that draw a small amount of current. It is underlined that the circuit shown in Fig.9 is only an example, and this invention can be realized using any other type of circuit that connects up the various elements regarding this invention so as to give the same results.

The active, independent marking strip covered by this invention, which is activated by the approaching traffic, reveals itself as being very valuable for use in places where there are problems regarding the maintenance of road safety. This type of marking strip also has a very important utility giving warning of an icy road hazard. In accomplishing this end, the last part of the roadway strip is coated with a layer of cholesteric liquid crystals incapsulated and coated with a transparent film of polyurethane, which change color at low temperatures. This part of the marking strip is illuminated by a LED, which gives the motorist a forewarning of any existing skid conditions on the road.

The warning of an ice hazard by means of the prefabricated, luminous roadway marking strip described in this invention can also be implemented electrically, using sensors located, for example, inside of the control box (50), which can give a warning that is given at a preset temperature. When this preset temperature obtains, the sensor lights up a certain-colored LED - for example, red - which provides the warning of the icy condition of the road. Such technology is already well known by the experts in this field.

## Claims

1. A prefabricated tape-like composite roadway marking material for horizontal road-marking purposes, in the form of a composite marking strip, comprising in combination:
a) a continuous base strip (8, Fig. 1; 12, 13, Fig. 2; 22, Fig. 4 through 7; 42, Fig. 8) to be applied to the surface of the roadway;
b) a series of transparent protruding elements (7, Fig. 1; 48, Fig. 8) located in predetermined positions distributed along said base strip said protruding elements housing low-current-drawing active electrical light sources (6, Fig. 1; 18, Fig. 4 through 7);
c) circuit means connecting said electrical light sources with a low-current electrical power supply including control switch means (1, Fig. 1; 12, 34, 38, 24, 26, Fig. 6; 52, 60, 62, 64, 66, Fig. 9) for controlling the energization of said light sources with current generated by said power supply, said circuit means being arranged in said base strip;
d) said control switch means comprising a photosensitive device (1-4, Fig. 1; 12, Fig. 4 through 7; 52, Fig. 8 and 9) located an the strip and arranged for being excited by light from the head-lights of approaching motor vehicles whereby to effect energization of said light sources in dependence on light received from the head-lights of approaching motor vehicles;
**characterized in that**
at least a portion of the surface of said marking strip comprises cholesteric liquid crystals that change colour at low temperatures.

2. The marking strip according to Claim 1 and in which said cholesteric liquid crystals are in the form of a layer.

3. The marking strip according to Claim 2 and in which said layer is coated with a transparent film of polyurethane.

4. The marking strip according to Claim 1 or 2 and in which said crystals are encapsulated with a transparent film of polyurethane.

5. The marking strip according to any one of Claims 1 to 4 and in which at least one of said light sources is positioned to illuminate said portion of the surface of said marking strip.

6. The marking strip according to anyone of Claims 1 to 5 and in which said control switch means further comprises a timer (64, Fig. 9) to cause a time lag between the time said photosensitive device (52, Fig. 9) is excited and when said low-current-drawing light sources are energized.

7. The marking strip according to anyone of Claims 1 to 6 and in which said control switch means further comprises a timer (66, Fig. 9) to cause said low-current-drawing light sources to operate in a blinking mode.

8. The marking strip according to any one of Claims 1 to 7 and in which said low-current-drawing electrical light sources are light-emitting diodes.

9. The marking strip of any of the preceding claims further characterized in that said photosensitive device comprises a light focusing unit (4, Fig. 1).

10. The marking strip of any of the preceding claims further characterized in that said material further comprises retroreflecting elements (46, Fig. 8) on the surface thereof.

11. The marking strip of Claim 10 further characterized in that said retroreflecting elements are catadioptric prisms.

12. The marking strip of any of the preceding claims comprising photoelectric current generators (44, Fig. 8) for receiving day light solar energy and converting it into electrical energy, via suitable storage means (54, Fig. 9) for providing said low-current electrical power supply, said current generators (44) and said storage means (54) being mounted on or in said base strip.

## Patentansprüche

1. Vorgefertigtes, bandartiges Fahrbahnmarkierungsverbundmaterial zum Zwecke der horizontalen Fahrbahnmarkierung in Form eines zusammengesetzten Markierungsstreifens, der in Kombination folgendes umfaßt:
a) einen durchgehenden Trägerstreifen (8, Fig. 1; 12, 13, Fig. 2; 22, Fig. 4 bis 7; 42, Fig. 8), der auf der Oberfläche der Fahrbahn aufzubringen ist;
b) eine Reihe transparenter, erhabener Elemente (7, Fig. 1; 48, Fig. 8), die in vorgegebenen Positionen verteilt entlang des Trägerstreifens angeordnet sind, wobei die erhabenen Elemente einen niedrigen Strom ziehende, aktive elektrische Lichtquellen (6, Fig. 1; 18, Fig. 4 bis 7) aufnehmen;
c) eine Schaltungseinrichtung zur Verbindung der elektrischen Lichtquellen mit einer elektrischen Schwachstromversorgung einschließlich einer Steuerungsschalteinrichtung (1, Fig. 1; 12, 34, 38, 24, 26, Fig. 6; 52, 60, 62, 64, Fig. 9) zur Steuerung der Erregung der Lichtquelle mit dem durch die Stromversorgung gelieferten Strom, wobei die Schaltungseinrichtung in dem Trägerstreifen angeordnet ist;
d) wobei die Steuerungsschalteinrichtung eine lichtempfindliche Vorrichtung (1-4, Fig. 1; 12, Fig. 4 bis 7; 52, Fig. 8 und 9) enthält, die auf dem Band so angeordnet ist, daß sie durch das Licht der Scheinwerfer sich nähernder Kraftfahrzeuge erregt wird, um dadurch wiederum die Erregung der Lichtquellen in Abhängigkeit des von den Scheinwerfern herannahender Kraftfahrzeuge empfangenden Lichtes zu bewirken,
**dadurch gekennzeichnet, daß**
mindestens ein Teil der Oberfläche des Markierungsstreifens cholesterische Flüssigkristalle enthält, die bei niedrigen Temperaturen ihre Farbe wechseln.

2. Markierungsstreifen gemäß Anspruch 1, dadurch gekennzeichnet, daß die cholesterischen Flüssigkristalle in Form einer Schicht vorliegen.

3. Markierungsstreifen gemäß Anspruch 2, dadurch gekennzeichnet, daß die Schicht mit einer transparenten Polyurethanfolie bedeckt ist.

4. Markierungsstreifen gemäß Anspruch 1 oder 2, dadurch gekennzeichnet, daß die Kristalle in eine transparente Polyurethanfolie eingekapselt sind.

5. Markierungsstreifen gemäß einem der Ansprüche 1 bis 4, dadurch gekennzeichnet, daß mindestens eine der Lichtquellen so positioniert ist, daß sie den Teil der Oberfläche des Markierungsstreifen beleuchtet.

6. Markierungsstreifen gemäß einem der Ansprüche 1 bis 5, dadurch gekennzeichnet, daß die Steuerungsschalteinrichtung weiterhin einen Zeitgeber (64, Fig. 9) umfaßt, der eine Zeitverzögerung zwischen dem Zeitpunkt, in dem die lichtempfindliche Vorrichtung (52, Fig. 9) erregt wird, und dem Zeitpunkt, in dem die den niedrigen Strom ziehenden Lichtquellen erregt werden, herbeiführt.

7. Markierungsstreifen gemäß einem der Ansprüche 1 bis 6, dadurch gekennzeichnet, daß die Steuerungsschalteinrichtung weiterhin einen Zeitgeber (66, Fig. 9) umfaßt, der die den niedrigen Strom ziehenden Lichtquellen dazu veranlaßt, im Blinkbetrieb zu arbeiten.

8. Markierungsstreifen gemäß einem der Ansprüche 1 bis 7, dadurch gekennzeichnet, daß die einen niedrigen Strom ziehenden elektrischen Lichtquellen Leuchtdioden sind.

9. Markierungsstreifen gemäß einem der vorhergehenden Ansprüche, ferner dadurch gekennzeichnet, daß das lichtempfindliche Gerät eine Lichtfokussiereinheit (4, Fig. 1) umfaßt.

10. Markierungsstreifen gemäß einem der vorhergehenden Ansprüche, ferner dadurch gekennzeichnet, daß das Material außerdem auf seiner Oberfläche rückstrahlende Elemente (46, Fig. 8) aufweist.

11. Markierungsstreifen gemäß Anspruch 10, ferner dadurch gekennzeichnet, daß die rückstrahlenden Elemente katadioptrische Prismen sind.

12. Markierungsstreifen gemäß einem der vorhergehenden Ansprüche, dadurch gekennzeichnet, daß er photoelektrische Stromgeneratoren (44, Fig. 8) enthält, die die Sonnenenergie des Tageslichtes empfangen und sie mittels einer geeigneten Speichereinrichtung (54, Fig. 9) in elektrische Energie umwandeln, um den elektrischen Versorgungs-Schwachstrom bereitzustellen, wobei die Stromgeneratoren (44) und die Speichereinrichtung (54) auf oder in dem Trägerstreifen angeordnet sind.

## Revendications

1. Matériel de signalisation ou de marquage routier, composite, du type en ruban, préfabriqué, destiné à des besoins de marquage routier horizontal, se présentant sous la forme d'une bande de marquage ou de signalisation composite, comprenant en combinaison :
(a) une bande de base continue (8, Figure 1; 12, 13, Figure 2; 22, Figures 4 à 7; 42, Figure 8) destinée à être appliquée à la surface de la voie routière;
(b) une série d'éléments saillants transparents (7, Figure 1; 48, Figure 8) localisés dans des positions prédéterminées, réparties le long de cette bande de base, ces éléments saillants incorporant des sources de lumière électrique, actives, ne consommant que peu de courant (6, Figure 1; 18, Figures 4 à 7);
(c) des moyens à circuit connectant les sources de lumière électrique avec une alimentation d'énergie électrique, de faible courant, notamment des moyens à commutateur de réglage (1, Figure 1; 12, 34, 38, 24, 26, Figure 6; 52, 60, 62, 64, 66, Figure 9) pour le réglage de l'alimentation de ces sources de lumière par un courant généré par l'alimentation d'énergie précitée, ces moyens à circuit étant agencés dans la bande de base précitée;
(d) les moyens de commutation et de réglage comprenant un dispositif photosensible (1-4, Figure 1; 12, Figure 4 à Figure 7; 52, Figures 8 et 9) localisé sur la bande et agencé pour être excité par la lumière provenant des phares des véhicules automobiles se rapprochant, de manière à assurer une excitation des sources de lumière précitées suivant la lumière reçue des phares des véhicules automobiles se rapprochant,
caractérisé en ce que :
au moins une partie de la surface de la bande de marquage ou de signalisation précitée comprend des cristaux liquides cholestériques qui changent de couleur aux basses températures.

2. Bande de marquage ou de signalisation suivant la revendication 1, dans laquelle les cristaux liquides cholestériques sont sous la forme d'une couche.

3. Bande de marquage ou de signalisation suivant la revendication 2, dans laquelle la couche susdite est revêtue d'un film transparent de polyuréthanne.

4. Bande de marquage ou de signalisation suivant la revendication 1 ou 2, dans laquelle les cristaux susdits sont encapsulés par un film transparent de polyuréthanne.

5. Bande de marquage ou de signalisation suivant l'une quelconque des revendications 1 à 4, dans laquelle au moins l'une des sources de lumière précitées est positionnée de manière à illuminer la partie susdite de la surface de la bande de marquage ou de signalisation.

6. Bande de marquage ou de signalisation suivant l'une quelconque des revendications 1 à 5, dans laquelle les moyens de commutation et de réglage précités comprennent en outre un minuteur (64, Figure 9) destiné à créer un retard dans le temps entre le moment où le dispositif photosensible susdit (52, Figure 9) est excité et le moment où les sources de lumière ne consommant que peu de courant sont excitées.

7. Bande de marquage ou de signalisation suivant l'une quelconque des revendications 1 à 6, dans laquelle les moyens de commutation et de réglage comprennent en outre un minuteur (66, Figure 9) destiné à amener les sources de lumière précitées, ne consommant que peu de courant, à opérer suivant un mode intermittent.

8. Bande de marquage ou de signalisation suivant l'une quelconque des revendications 1 à 7, dans laquelle les sources de lumière électrique, ne consommant que peu de courant, sont constituées par des diodes électroluminescentes (LED).

9. Bande de marquage ou de signalisation suivant l'une quelconque des revendications précédentes, caractérisée en outre en ce que le dispositif photosensible précité consiste en une unité de focalisation de lumière (4, Figure 1).

10. Bande de marquage ou de signalisation suivant l'une quelconque des revendications précédentes, caractérisée en outre en ce que le matériel précité comprend de plus des éléments rétroréfléchissants (46, Figure 8) sur sa surface.

11. Bande de marquage ou de signalisation suivant la revendication 10, caractérisée en outre en ce que les éléments rétroréfléchissants sont constitués par des prismes catadioptriques.

12. Bande de marquage ou de signalisation suivant l'une quelconque des revendications précédentes, comprenant des générateurs de courant photoélectriques (44, Figure 8) destinés à recevoir l'énergie solaire de la lumière du jour et à la convertir en énergie électrique, à l'intervention de moyens de stockage appropriés (54, Figure 9) pour former l'alimentation d'énergie électrique de faible courant précitée, ces générateurs de courant (44) et ces moyens de stockage (54) étant montés sur ou dans la bande de base précitée.
